# EUROPEAN PATENT APPLICATION

(11) **EP 1 608 079 A1**
(43) Date of publication of application: **21.12.2005**
(21) Application number: 04722672.5
(22) Date of filing: 23.03.2004
(51) Int. Cl.: H04B 1/707

(54) **APPARATUS AND METHOD FOR PATH DETECTION**

(30) Priority: 26.03.2003 JP 2003084993
(71) Applicant: MATSUSHITA ELECTRIC INDUSTRIAL CO., LTD., Kadoma-shi, Osaka-fu 571-8501 (JP)
(72) Inventor: SASAKI, Deizo, Yokohama-shi (JP); NAKA, Katsuyoshi, Kanagawa 239-0807 (JP); TANBO, Hideaki, Kanagawa 239-0828 (JP)
(74) Representative: Grünecker, Kinkeldey, Stockmair & Schwanhäusser Anwaltssozietät
(86) International application number: PCT/JP2004/003927
(87) International publication number: WO 2004/086645

(57) **Abstract**

An adjacent sample comparison processing section 201 compares power values between adjacent samples of a delay profile created based on an oversampled received signal and detects whether the power value is increasing or decreasing. A comparison result storage processing section 204 adds 1 when information on an increase/decrease in power values between the adjacent samples remains the same as information in the previous time or resets the information and newly sets 1 when the information is different from the information in the previous time. A slope decision processing section 205 controls a path selection section 207 when the count number of the comparison result storage processing section 204 becomes the same as an oversampling number so as to select the corresponding sample as a path. The path selection section 207 selects the sample having a peak value as a path candidate and also selects the sample instructed from the slope decision processing section 205 as a path. This makes it possible to reduce an amount of calculation in selecting a path, reliably select a path and reduce an error rate of received data.

## Description

### Technical Field

The present invention relates to a path detection apparatus and path detection method, and more particularly, to a path detection apparatus and path detection method for detecting a first arrived wave and delay wave using a delay profile.

### Background Art

As a path detection method using a delay profile, a maximum value detection method and peak value detection method are conventionally available.

The maximum value detection method is a method for selecting a sample having a maximum power value of each element (sample) in a delay profile as a path. That is, this method uses maximum value detection for a delay profile, extracts a detected sample first and then carries out processing of setting power to 0 for a one-chip section before and after including the detected sample (K-1 section before and after the detected sample in the case of K oversampling) and repeats maximum value detection for the delay profile the number of times corresponding to the maximum number of fingers to detect path candidates. After discarding path candidates through threshold processing, a path candidate list approves remaining path candidates as detected paths.

More specifically, the power value of a delay profile detected first as a path is set as a maximum value and compared with the power value of a path detected second. When the power value of the first path is greater, the power value of the first path is stored as a maximum value as is and when the power value of the second detected path is greater, the power value of the second path is newly stored as a maximum value instead of the first path. Such a calculation is repeated until scanning of the entire delay profile is completed and the path of a maximum value which is eventually left is approved as a path. Then, several samples before and after a delay profile corresponding to the path which has been approved as the maximum value are cleared to 0 and the above described processing is repeated the same number of times as the fingers. Then, the same number of maximum values as the detected fingers are assigned to the fingers as paths. In such a maximum value detection method, there is one maximum value within the scanning range of the delay profile, and therefore, for example, when the number of fingers is 6, it is necessary to carry out scanning six times.

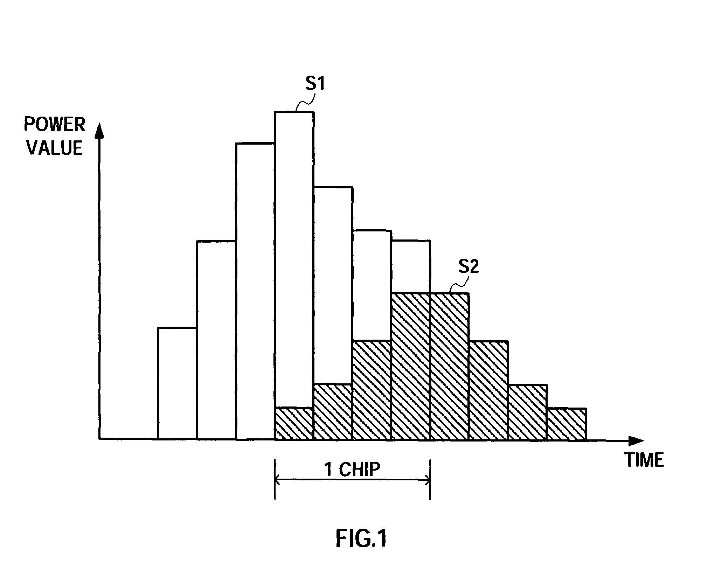

On the other hand, the peak value detection method is a method of selecting as a path, a sample for which the power value of each sample in a delay profile is a peak. FIG.1 shows a delay profile created, when paths exist at 1-chip intervals, based on a received signal oversampled in such a way that one chip consists of 4 samples and shows a case where the power value of sample S2 is 1/2 of the power value of sample S1. Since sample S1 is a peak value as shown in FIG.1, the peak value detection method can detect sample S1 as a path.

However, when a maximum value detection method is used as the path detection method in the conventional path detection apparatus and path detection method, it is possible to reliably detect maximum values and peak values corresponding in number to high-order fingers, and therefore path detection accuracy is high, but a delay profile must be scanned the same number of times as the number of fingers, which causes a problem that the amount of calculation increases.

On the other hand, when the peak value detection method is used as the path detection method, the amount of calculation is reduced, but as shown in FIG.1, when paths exist at one-chip intervals, sample S2 is also a path that should originally be selected as a delay wave, but sample S2 is not a peak value and so it is not selected as a path, which causes a problem that a received signal cannot be detected sufficiently and errors occur in the received data. Especially, when a communication is carried out in an environment such as indoors, in which there are many obstacles and multipaths are likely to occur, a delay wave which is slightlybehind a first arrived wave may be measured and in an environment in which multipaths occur, errors are further likely to occur in received data.

### Disclosure of Invention

It is an object of the present invention to provide a path detection apparatus and path detection method capable of reducing an amount of calculation in selecting a path, reliably selecting a path and reducing an error rate of the received data.

This object can be attained by selecting, when a power value of each sample of a delay profile created based on a received signal by being sampled chip by chip with a predetermined sampling number decreases or increases from a sample having a peak value for k samples consecutively, the kth sample from the sample having the peak value as a path.

### Brief Description of Drawings

FIG.1 illustrates a delay profile;
FIG.2 is a block diagram showing the configuration of a reception apparatus according to Embodiment 1 of the present invention;
FIG.3 is a block diagram showing the configuration of a path detection apparatus according to Embodiment 1 of the present invention;
FIG.4 is a flow chart showing the operation of the path detection apparatus according to Embodiment 1 of the present invention;
FIG.5 illustrates a delay profile;
FIG.6 illustrates a delay profile;
FIG.7 illustrates a delay profile;
FIG. 8 illustrates a shape of a delay profile according to magnitude comparison result information;
FIG.9 is a block diagram showing the configuration of a path detection apparatus according to Embodiment 2 of the present invention;
FIG.10 is a flow chart showing the operation of the path detection apparatus according to Embodiment 2 of the present invention;
FIG.11 illustrates a delay profile;
FIG.12 is a block diagram showing the configuration of a reception apparatus according to Embodiment 3 of the present invention; and
FIG.13 is a block diagram showing the configuration of a path detection apparatus according to Embodiment 3 of the present invention.

### Best Mode for Carrying out the Invention

With reference now to the attached drawings, embodiments of the present invention will be explained in detail below.

### (Embodiment 1)

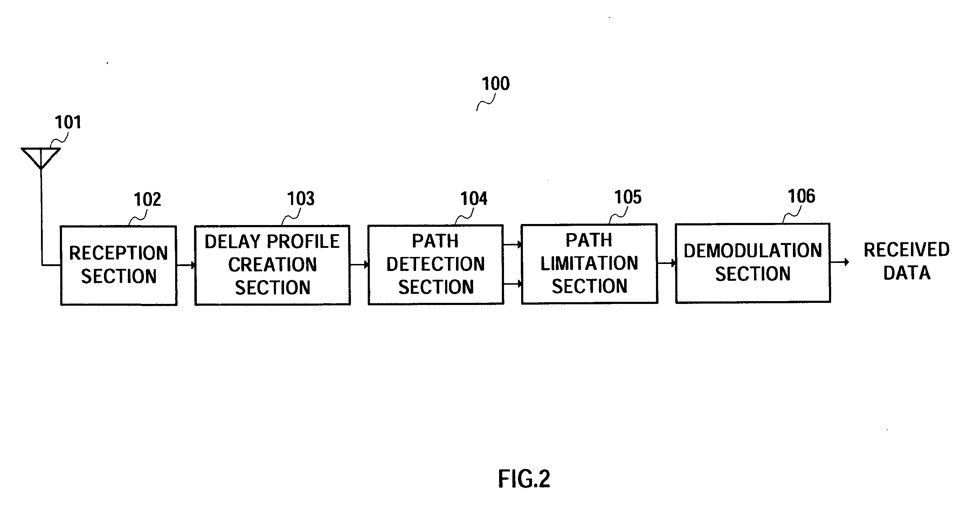

FIG.2 is a block diagram showing the configuration of a reception apparatus 100 provided with a path detection apparatus according to Embodiment 1 of the present invention. In FIG.2, a path detection section 104 and a path limitation section 105 constitute a path detection apparatus.

A delay profile creation section 103, the path detection section 104, the path limitation section 105 and a demodulation section 106 constitute a demodulation apparatus.

A reception section 102 carries out processing such as down-conversion of a signal received by an antenna 101 from a radio frequency to a baseband frequency. Furthermore, the reception section 102 oversamples the received signal chip by chip with a sampling number 4 and outputs the oversampled signal to the delay profile creation section 103. Here, the oversampling number is generally 2 or 4, but an arbitrary sampling number can be set instead of 2 or 4.

The delay profile creation section 103 creates a sequence code, carries out a correlation calculation on the received signal at all or some timings within a certain time width (window) and creates a delay profile having the above described time width (window) . Then, the delay profile creation section 103 outputs the delay profile created to the path detection section 104.

The path detection section 104 uses a delay profile input from the delayprofile creation section 103 to detect a peak value in the delay profile and selects the detected peak value as a path. Furthermore, when the power value of each sample decreases consecutively for four samples which correspond to sampling number 4 from the sample indicating the detected peak value, the path detection section 104 selects the fourth sample from the sample indicating the peak value as a path. Then, the path detection section 104 outputs the information on the detected path to the path limitation section 105. Furthermore, the path detection section 104 detects a maximum value from among peak values and outputs information on the detected maximum value to the path limitation section 105. Details of the path detection section 104 will be described later.

The path limitation section 105 compares the power value of each selected path with a threshold from the information on the selected path input from the path detection section 104. As the threshold, it is possible to set such an appropriate threshold that reduces the possibility of mistakenly selecting noise as a path by multiplying the information on the maximum value input from the path detection section 104 by a predetermined coefficient and allows a path having a power value at a predetermined level necessary for demodulation to be selected. As a result of the comparison by the path limitation section 105, even a path detected by the path detection section 104 whose power value does not exceed the threshold is not selected as a path. In an environment in which no error occurs in the received data, there is generally a difference of 10 dB or more between a noise power value and a path power value, and therefore even if noise is mistakenly selected as a path, it is possible to reliably remove the noise by setting the threshold to an appropriate value. This prevents errors in the received data caused by demodulating noise mistakenly detected as a path by the path detection section 104. The path limitation section 105 outputs the path narrowed down in this way to the demodulation section 106 as a finally selected path.

The demodulation section 106 assigns paths selected by the path limitation section 105 to their respective fingers, RAKE combines and demodulates the paths to obtain received data.

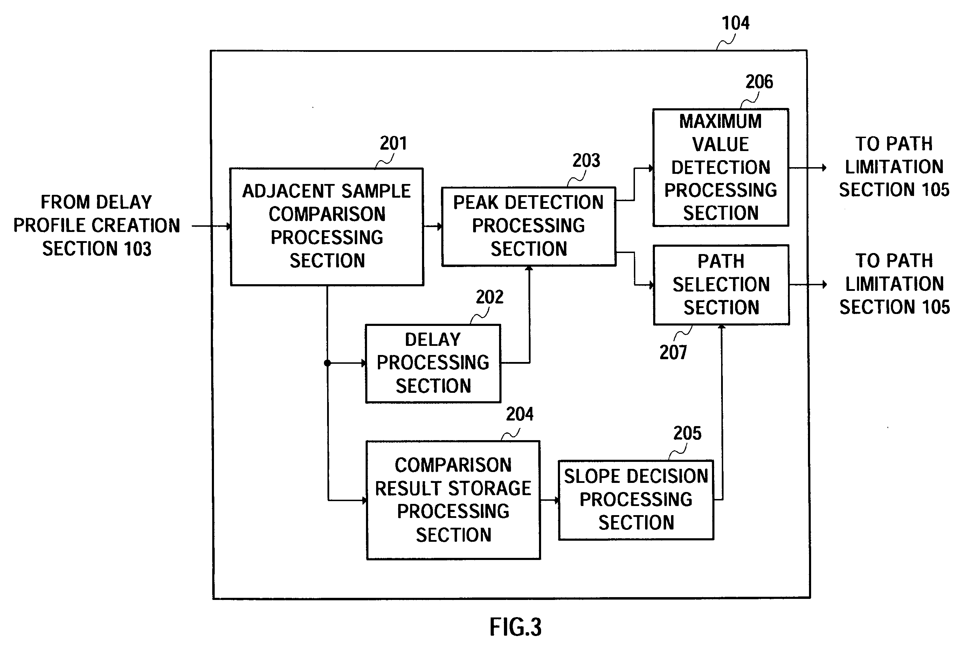

Next, the path detection section 104 will be explained using FIG.3. FIG.3 is a block diagram showing the configuration of the path detection section 104.

An adjacent sample comparison processing section 201, which is a comparison section, compares power values between adjacent samples of a delay profile. That is, the adjacent sample comparison processing section 201 stores power value information on a sample (hereinafter referred to as "immediately preceding sample") immediately preceding the last sample (hereinafter referred to as "current sample") input to the adjacent sample comparison processing section 201 and compares the power value of the current sample with the power value of the immediately preceding sample from samples of the delay profile input one by one from the delay profile creation section 103. Then, the adjacent sample comparison processing section 201 outputs the information on the power value magnitude comparison result (hereinafter referred to as "magnitude comparison result information") to a peak detection processing section 203 and a delay processing section 202. Here, the magnitude comparison result information is information indicating "YES" if the power value has been decreased from that of the immediately preceding sample or information indicating "NO" if the power value has not been decreased from that of the immediately preceding sample.

The delay processing section 202 gives a delay to the magnitude comparison result information input from the adjacent sample comparison processing section 201 and outputs it to the peak detection processing section 203. The delay processing section 202 outputs the magnitude comparison result information on the current sample to the peak detection processing section 203 at such a that allows the peak detection processing section 203 to compare the magnitude comparison result information on the current sample with the magnitude comparison result information on the immediately preceding sample.

Every time the magnitude comparison result information is input from the adjacent sample comparison processing section 201, the peak detection processing section 203 compares it with the magnitude comparison result information on the immediately preceding sample. That is, when the magnitude comparison result information on the immediately preceding sample is information which indicates "NO", while the magnitude comparison result information on the current sample is information which indicates "YES", the immediately preceding sample is decided to be a peak value. When both the magnitude comparison result information on the immediately preceding sample and the magnitude comparison result information on the current sample are "NO" or "YES", and when the magnitude comparison result of the immediately preceding sample is "YES" and the magnitude comparison result information on the current sample is "NO", the immediately preceding sample is decided not to be a peak value. Then, the peak detection processing section 203 outputs the information on the immediately preceding sample which is the detected peak value to a maximum value detection processing section 206 and a path selection section 207 and outputs the information on the current sample to the path selection section 207 when the immediately preceding sample is decided not to be a peak value.

A comparison result storage processing section 204 counts the number of times "NO" or "YES" is input consecutively based on the magnitude comparison result information input from the adjacent sample comparison processing section 201 and outputs the counted count number information to a slope decision processing section 205. When different magnitude comparison result information is shown during the count, the comparison result storage processing section 204 resets the count and restarts the count from 1 after the reset.

When the count number information input from the comparison result storage processing section 204 shows that the count number is 4, the slope decision processing section 205 controls the path selection section 207 so as to select the sample whose count number becomes 4 as a path.

Every time information on the peak value input from the peak detection processing section 203 is received, the maximum value detection processing section 206 compares the magnitude of power values and always stores a greater power value as a result of the comparison. This allows the maximum value detection processing section 206 to finally detect a maximum value of the power value. Then, after the scanningof the delayprofile is completed, the maximum value detection processing section 206 outputs the information on the detected maximum value to the path limitation section 105.

When instructed from the slope decision processing section 205 to select as a path, the path selection section 207 selects the instructed sample from among samples input from the peak detection processing section 203 as a path. Then, until the entire delay profile is scanned, the path selection section 207 stores and lists the information on the selected paths input from the peak detection processing section 203 and outputs the information on all the listed and selected paths to the path limitation section 105 after the scanning of the delay profile is completed.

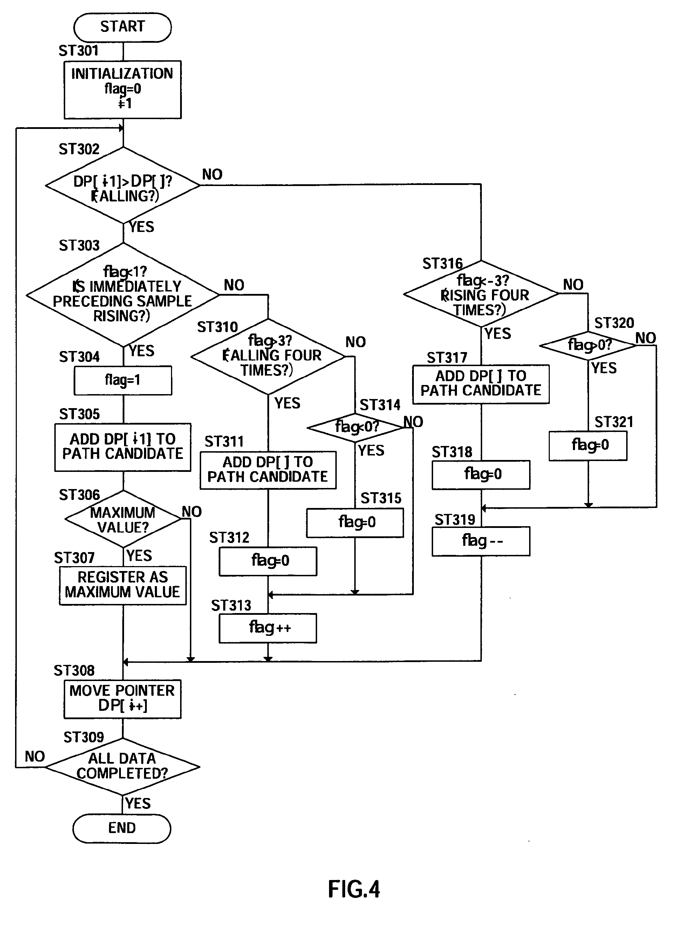

Next, the operation of the path detection section 104 will be explained using FIG.4.

First, the comparison result storage processing section 204 is initialized to flag=0 and i=1 (step ST301).

Next, the adjacent sample comparison processing section 201 compares the power value of the current sample of the delayprofilewith the power value of the immediately preceding sample.

Next, the peak detection section 203 compares the magnitude comparison result information input from the adjacent sample comparison processing section 201 with the magnitude comparison result information input from the delay processing section 202. That is, the power value of the magnitude comparison result information input from the delay processing section 202 is compared with the power value of the magnitude comparison result information input from the adjacent sample comparison processing section 201 and it is decided whether the comparison result becomes "YES" or not (falling or not) (step ST302).

When the comparison result is "YES", the peak detection processing section 203 decides whether a flag set based on the previous comparison result is flag<1 or not (rising or not) (step ST303).

When flag<1, the peak detection processing section 203 sets flag=1 (step ST304) and selects the immediately preceding sample of the comparison result input from the delay processing section 202 as a path candidate (step ST305) .

Next, the maximum value detection processing section 206 decides whether the power value of a path which is newly detected as a peak value is a maximum value or not when compared with the power values of paths selected and stored so far (step ST306).

When it is a maximum value, the maximum value detection processing section 206 registers it as a maximum value (step ST307) and moves a pointer to the next sample to create magnitude comparison result information with the next sample (step ST308).

When it is not a maximum value, the maximum value detection processing section 206 does not register it as a maximum value and moves the pointer to the next sample to create magnitude comparison result information with the next sample (step ST308).

Next, it is decided whether the creation of magnitude comparison result information has been completed or not within the scanning range of the delay profile (step ST309).

When the creation of the magnitude comparison result information is not completed yet, the maximum value detection processing section 206 returns to step ST302 and repeats similar processes.

On the other hand, flag<1 is not the case in step ST303, the comparison result storage processing section 204 decides whether flag>3 or not (whether a falling slope or not) (step ST310).

When flag>3, the comparison result storage processing section 204 outputs flag=4 to the slope decision processing section 205.

Then, because flag=4 has been input, the slope decision processing section 205 decides that the power value has decreased four times consecutively and controls the path selection section 207 so as to select the current sample as a path candidate (step ST311).

Next, the comparison result storage processing section 204 sets flag=0 (step ST312), adds 1 to the flag to set flag=1 (step ST313).

On the other hand, when flag>3 is not the case in step ST310, the comparison result storage processing section 204 decides whether flag<0 or not (step ST314) .

When flag<0, the comparison result storage processing section 204 sets flag=0 (step ST315), adds 1 to the flag to set flag=1 (step ST313).

When Flag<0 is not the case, the comparison result storage processing section 204 adds 1 to the numerical value set in the current flag (step ST313).

On the other hand, when the comparison result is "NO" in step ST302, the comparison result storage processing section 204 decides whether flag<-3 or not (whether a rising slope or not) (step ST316).

When flag<-3, the comparison result storage processing section 204 outputs flag=-4 to the slope decision processing section 205.

Then, since flag=-4 has been input, the slope decision processing section 205 decides that the power value has increased four times consecutively and controls the path selection section 207 so as to select the current sample as a path candidate (step ST317).

Next, the comparison result storage processing section 204 sets flag=0 (step ST318), adds -1 to the flag to set flag=-1 (step ST319).

On the other hand, when Flag<-3 is not the case in step ST316, the comparison result storage processing section 204 decides whether flag>0 or not (step ST320).

When flag>0, the comparison result storage processing section 204 sets flag=0 (step ST321), adds -1 to the flag to set flag=-1 (step ST319).

When flag>0 is not the case, the comparison result storage processing section 204 adds -1 to the numerical value set in the current flag (step ST319).

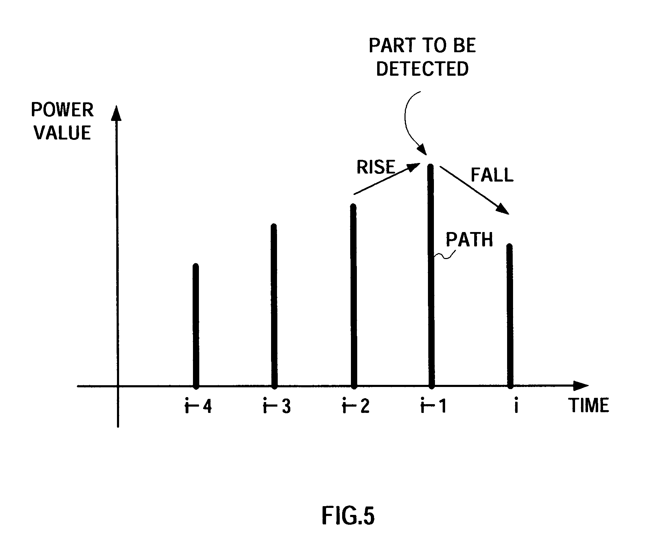

FIG.5 shows a peak value detection method. In FIG.5, a power value increases consecutively for 4 samples from sample (i-4) to sample (i-1) ahead and the power value of the current sample i decreases compared to the immediately preceding sample (i-1). In such a case, since the result of a comparison between the power value of sample (i-2) and the power value of immediately preceding sample (i-1) is "NO", while the result of a comparison between the power value of immediately preceding sample (i-1) and the power value of current sample i is "YES", the peak detection processing section 203 can detect that the power value has changed from a rise to a fall. In this way, the peak detection processing section 203 selects immediately preceding sample (i-1) as a peak value by carrying out processes from step ST302 to step ST305 in FIG.4.

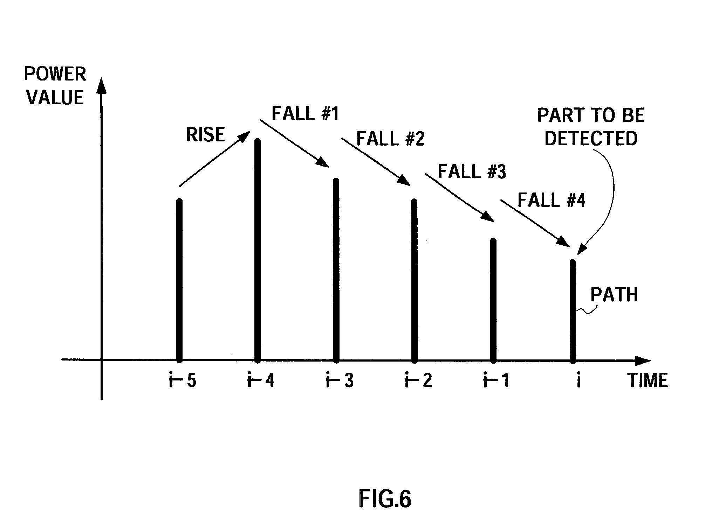

FIG.6 shows a method of detecting a delay wave in a case where paths exist at 1-chip intervals and the power value of a delay wave is 1/2 of the power value of a first arrived wave. When sample (i-4) is a first arrived wave and sample i is a delay wave, since the result of a comparison between the power value of immediately preceding sample (i-5) and the power value of current sample (i-4) is "NO", while the result of a comparison between the power value of immediately preceding sample (i-4) and the power value of current sample (i-3) is "YES", the comparison result storage processing section 204 newly resets the flag and sets 1 in the flag. Since the power value decreases consecutively from sample (i-4) to current sample i, the storage processing section 204 sets 4 in the flag when the result of a comparison between the power value of immediately preceding sample (i-1) and power value of current sample i is input to the comparison result storage processing section 204, and the slope decision processing section 205 detects flag=4 and controls the path selection section 207 so as to select sample i as a path. In this way, the comparison result storage processing section 204, slope decision processing section 205 and path selection section 207 select sample i as a path by carrying out processes in step ST310 and step ST311 in FIG.4.

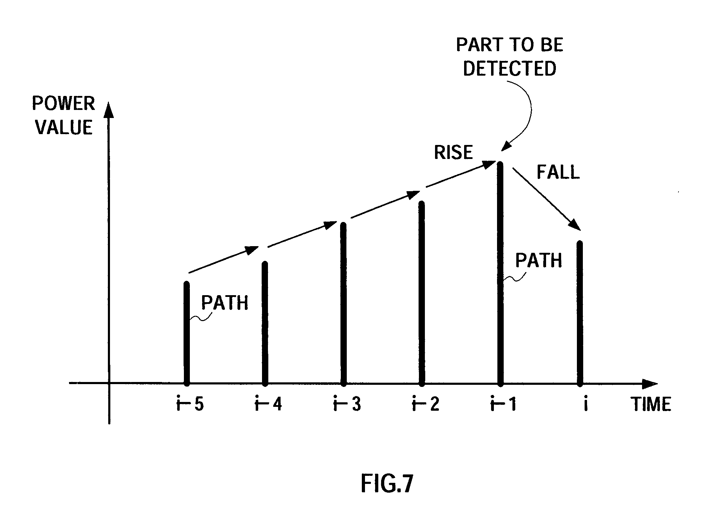

FIG.7 shows a method of detecting a delay wave in the case where paths exist at 1-chip intervals. When sample (i-5) is a first arrived wave and sample (i-1) is a delay wave, since the power value increases consecutively from sample (i-5) to sample (i-1), when the result of a comparison between the power value of immediately preceding sample (i-2) and the power value of current sample (i-1) is input to the comparison result storage processing section 204, the storage processing section 204 sets 4 in the flag and the slope decision processing section 205 detects flag=4 and controls the path selection section 207 so as to select current sample (i-1) as a path. In this way, the comparison result storage processing section 204, slope decision processing section 205 and path selection section 207 select current sample (i-1) as a path by carrying out processes in step ST316 and step ST317 in FIG.4. FIG.5 to FIG.7 describe the respective samples separated from one another on the time axis for convenience of explanation, but FIG.5 to FIG.7 can also describe the respective samples in contact with one another on the time axis as shown in FIG.1.

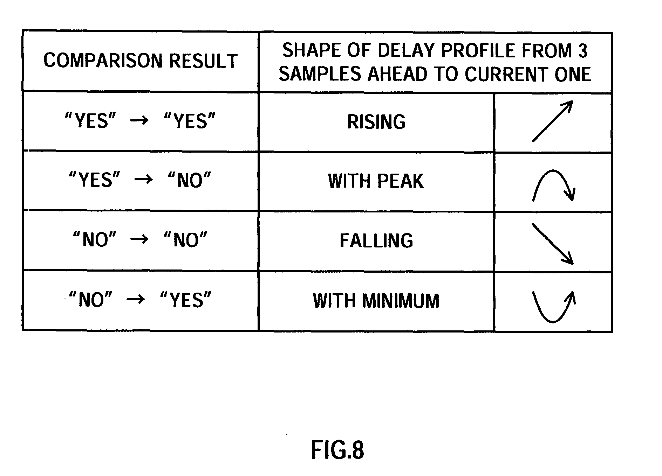

FIG.8 shows an approximate shape of a delay profile according to an input sequence of magnitude comparison result information. When the magnitude comparison result information results in "YES" two times consecutively, the shape of the delay profile becomes a rising one. On the other hand, when the magnitude comparison result information becomes "YES" and then "NO", the shape of the delay profile becomes one with a peak. Furthermore, when the magnitude comparison result information becomes "NO" two times consecutively, the shape of the delay profile becomes a falling one. Furthermore, when the magnitude comparison result information becomes "NO" and then "YES", the shape of the delay profile becomes one with a minimum.

With respect to the method of detecting a path here, the reason that the amount of calculation by the path detection method of this Embodiment 1 is by far smaller than the amount of calculation by the maximum value detection method will be explained using a case where the number of samples of a delay profile is 228 and the number of fingers is 6. According to the maximum value detection method, it is necessary to scan the delay profile the same number of times as the number of fingers as described above, and therefore calculations must be performed 1368 (= number of fingers 227×6) times. In contrast, according to the detection method of this Embodiment 1, the delay profile needs to be scanned only once, and therefore calculations must be performed only 227 (number of samples - 1) times. Therefore, the amount of calculation of the detection method according to this Embodiment 1 becomes 1/6 of the amount of calculation of the maximum value detection method.

In this regard, for example, when a transmission signal passes through a roll-off filter shown by the 3GPP TS25-105 and paths whose power value correspond to "1.0" , "0.5", "0.25", "0.125" in Case3 likewise shown in the 3GPP TS25-105 are delayed by a 1-chip time respectively, the delay profile has the slope as shown in FIG.6 and FIG.7. On the other hand, when the respective paths having the same power value as the Case3 are delayed by a 1.5-chip time, no slope occurs. A condition for producing a slope is limited to a case where a delay wave is attenuated considerably. When the respective paths are delayed by a 1.25-chip time, if the roll-off coefficient described in the 3GPP TS25-105 is applied to the roll-off filter, producing a slope requires the power value of a delay wave to be 0.07 times or less (power value of the delay wave is -11.5 dB or below) the power value of a first arrived wave. However, even if paths can be detected at -11.5 dB or below with respect to the power of the first arrived wave, there is quite a high possibility that the paths may be discarded through threshold processing. When the respective paths are delayed by a 1.5-chip time, producing a slope requires the delay wave to have a power value smaller than -11.5 dB, and therefore the possibility that the paths may be discarded through threshold processing further increases. Therefore, detecting paths with power values at such a small level will not contribute to the demodulation performance. For such reasons, it is possible to detect a delay wave which becomes a slope for a delay profile when the respective paths are delayed by a 1-chip time.

Furthermore, one symbol of a W-CDMA/TDD scheme compliant with the 3GPP has a maximum of 16 chips and in a scheme having such a short spreading factor, shifting by 1 chip causes inter-code interference and increases an error rate, but it is possible to considerably reduce the inter-code interference by detecting paths which have delayed by a 1-chip time and thereby using interference elimination.

Thus, according to this Embodiment 1, when power values of the respective samples decrease four times consecutively from the power value of a sample having a peak value, the sample whose power value is detected to decrease the fourth time is detected as a path, and therefore it is possible to reliably select a path and reduce the error rate of received data. Furthermore, the path detection section selects a path by detecting a peak value, and therefore there is no need to scan a delay profile the same number of times as the number of fingers and it is possible to reduce the amount of calculation. Furthermore, when no path exists, power values of noise components decrease for four samples consecutively and if those noise components are mistakenly selected as paths, the path limitation section makes a decision against a threshold, thus preventing the noise components from being selected as paths during demodulation, and therefore the error rate will not increase.

In this Embodiment 1, the path limitation section 105 obtains a threshold with which power values of the respective paths are compared from a maximum value of power values of selected paths, but the method is not limited to this and a threshold may be obtained from noise or a threshold may be obtained using both the maximum value of power values of paths or a threshold may be obtained based on communication quality. Furthermore, in FIG.6 of this Embodiment 1, the sample whose sample number corresponds to the sampling number counted from the sample having the maximum value is selected as a path, but instead of such a method, it is also possible to count from an arbitrary sample. Furthermore, FIG.7 of this Embodiment 1 has described the case where the detected path is a peak value, but instead of the peak value it is also possible to select the current sample as a path when a condition of flag>-3 is satisfied.

### (Embodiment 2)

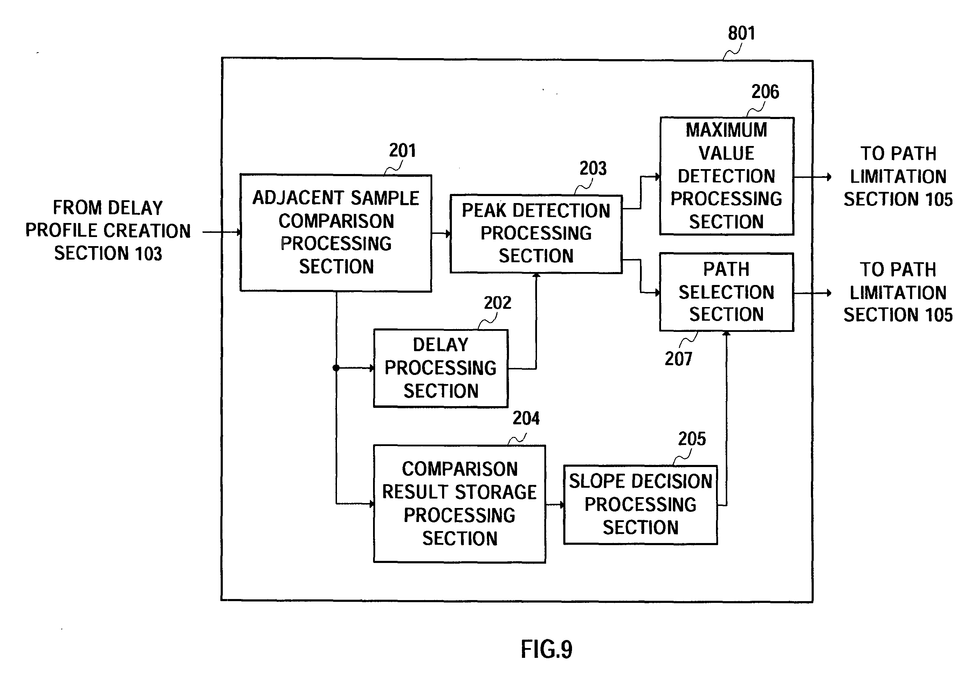

FIG.9 shows the configuration of a path detection section 801 according to Embodiment 2 of the present invention. In FIG.9 of this Embodiment 2, parts having the same configurations as those in FIG.3 are assigned the same reference numerals and explanation thereof will be omitted. Furthermore, the configuration of the reception apparatus in this Embodiment 2 is the same as the configuration in FIG.2, and therefore explanation thereof will be omitted.

Every time the magnitude comparison result information is input from an adjacent sample comparison processing section 201, a peak detection processing section 203 compares it with the magnitude comparison result information on an immediately preceding sample. That is, when the magnitude comparison result information on the immediately preceding sample is information which indicates "NO", while the magnitude comparison result information on the current sample is information which indicates "YES", the immediately preceding sample is decided to be a peak value. When both the magnitude comparison result information on the immediately preceding sample and the magnitude comparison result information on the current sample are "NO" or "YES", and when the magnitude comparison result of the immediately preceding sample is "NO" and the magnitude comparison result information on the current sample is "YES", the immediately preceding sample is decided not to be a peak value. Then, the peak detection processing section 203 outputs the information on the immediately preceding sample which is the detected peak value to a maximum value detection processing section 206 and a path selection section 207 and outputs the information on the current sample to the path selection section 207 when the immediately preceding sample is decided not to be a peak value. Furthermore, when a peak value is detected, the peak detection processing section 203 outputs the information that the peak value has been detected to a slope decision processing section 205.

The slope decision processing section 205 stores the count number information input from a comparison result storage processing section 204 associated with the reception timing of the sample. Then, when information that a peak value has been detected is input from the peak detection processing section 203, the slope decision processing section 205 decides whether the count number of the immediately preceding sample is 4 or not and controls, when the count number is 4, the path selection section 207 so as to select the fourth sample ahead from the immediately preceding sample as a path. On the other hand, when no information that a peak value has been detected is input from the peak detection processing section 203 or when information that a maximum value has been detected is input from the peak detection processing section 203 and the count number of the immediately preceding sample is not 4, the slope decision processing section 205 does not control the path selection section 207 so as to select the sample as a path.

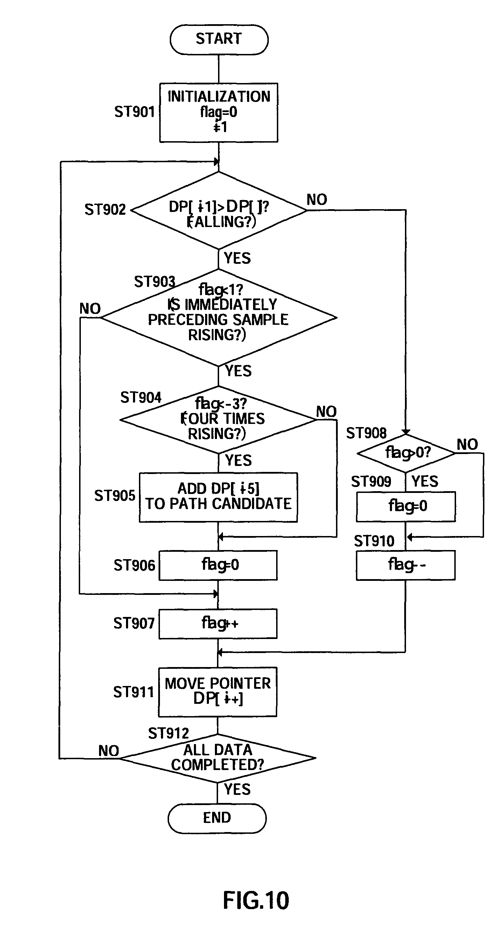

Next, the operation of the path detection section 801 will be explained using FIG.10.

First, a comparison result storage processing section 204 is initialized as flag=0 and i=1 (step ST901).

Next, the peak detection section 203 compares the magnitude comparison result information input from the adjacent sample comparison processing section 201 with the magnitude comparison result information input from a delay processing section 202. That is, the peak detection section 203 compares the power value of the magnitude comparison result information input from the delay processing section 202 with the power value of the magnitude comparison result information input from the adjacent sample comparison processing section 201 and decides whether the comparison result becomes "YES" or not (falling or rising) (step ST902).

When the comparison result is "YES", the peak detection processing section 203 decides whether a flag set based on the previous comparison result is flag<1 or not (rising or not) (step ST903).

When flag<1, the peak detection processing section 203 decides whether flag<-3 or not (step ST904).

When flag<-3, the slope decision processing section 205 controls the path selection section 207 so as to select the path of the immediately preceding sample when flag=-1 is set (step ST905).

Next, the comparison result storage processing section 204 sets flag=0 (step ST906), then adds +1 to the flag and sets flag=+1 (step ST907).

When flag<-3 is not the case in step ST904, the comparison result storage processing section 204 sets flag=0 (step ST906), adds +1 to the flag and sets flag=+1 (step ST907).

When flag<1 is not the case in step ST903, the comparison result storage processing section 204 adds +1 to the flag (step ST907).

On the other hand, when the comparison result is "NO" in step ST902, the comparison result storage processing section 204 decides whether flag>0 or not (step ST908) and sets flag=0 when flag>0 (step ST909) and adds -1 to the numerical value set in the current flag (step ST910) .

When flag>0 is not the case in step ST908, the comparison result storage processing section 204 adds -1 to the numerical value set in the current flag (step ST910) .

The comparison result storage processing section 204 moves a pointer for creating magnitude comparison result information for the next sample to the next sample (step ST911).

Next, the comparison result storage processing section 204 decides whether the creation of the magnitude comparison result information within the scanning range of the delay profile has completed or not (step ST912).

When the creation of the magnitude comparison result information has not been completed yet, the comparison result storage processing section 204 returns to step ST902 and repeats similar processes. The aspect that the processes from step ST305 to step ST307 in FIG. 4 are carried out between step ST903 and step ST904 is the same as that in FIG.4, and therefore explanations thereof will be omitted.

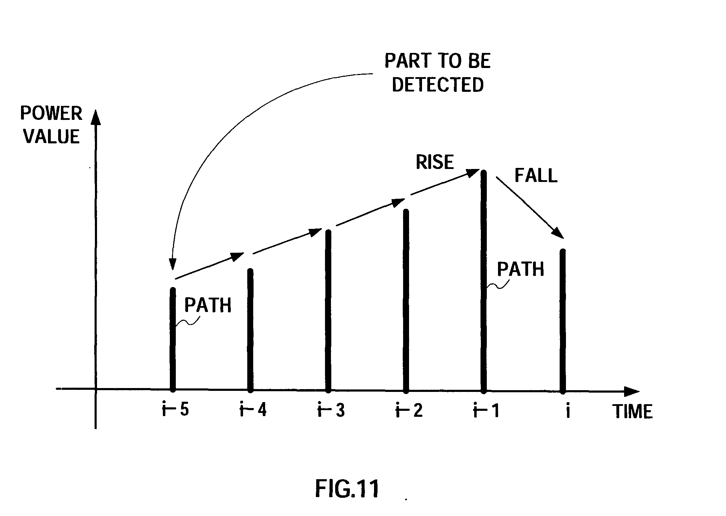

FIG.11 shows a method of detecting a plurality of paths when paths exist at chip intervals. When sample (i-5) and sample (i-1) are paths, the peak detection processing section 203 detects immediately preceding sample (i-1) as a peak value and the slope decision processing section 205 detects that power value is rising from sample (i-5) to immediately preceding sample (i-1) consecutively and that the flag is -4 when the result of a comparison between the power value of sample (i-2) and power value of immediately preceding sample (i-1) is input to the comparison result storage processing section 204 and controls the path selection section 207 so as to select sample (i-5) as a path. In this way, the comparison result storage processing section 204, slope decision processing section 205 and path selection section 207 select sample (i-5) as a path by carrying out the processes in FIG.10.

Thus, according to this Embodiment 2, after a peak value is detected, if the power value rises from a fourth sample ahead of an immediately preceding sample having a peak value to the sample having the peak value consecutively, the path detection section detects the fourth sample ahead of the sample of the peak value as a path, and therefore it is possible to reliably select a path and reduce the error rate of received data. Furthermore, the path detection section selects a path by detecting a peak value, and therefore it is not necessary to scan a delay profile the same number of times as the number of fingers and it is possible to reduce an amount of calculation. Furthermore, in the case where no path exists, power values of noise components increase for four samples consecutively and the noise components are mistakenly selected as paths, the path limitation section makes a decision against a threshold, which prevents the noise components from being selected as paths during demodulation and thereby prevents the error rate from increasing.

In this Embodiment 2, the path limitation section 105 obtains a threshold to be compared with power values of the respective paths from a maximum value of the power value of the selected path, but instead of this, it is also possible to obtain a threshold from noise or obtain a threshold using both a maximum value of a power value of a path and noise or obtain a threshold based on communication quality. Furthermore, the path detection apparatus of this Embodiment 2 can also be applied to the path detection apparatus of Embodiment 1 above.

### (Embodiment 3)

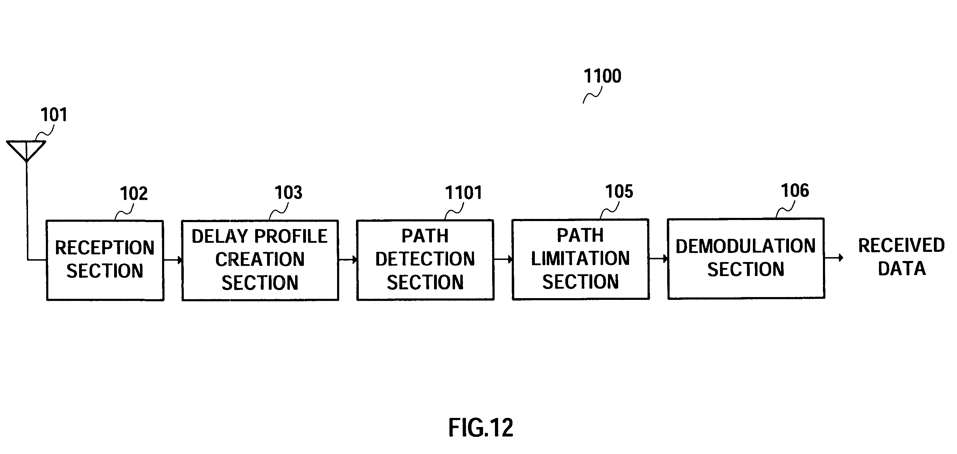

FIG.12 shows the configuration of a reception apparatus 1100 according to this Embodiment 3. The reception apparatus 1100 has a path detection section 1101 instead of the path detection section 104 of the reception apparatus 100 according to Embodiment 1 shown in FIG. 2. In FIG. 12, parts having the same configurations as those in FIG.2 are assigned the same reference numerals and explanations thereof will be omitted.

The path detection section 1101 and a path limitation section 105 constitute a path detection apparatus. Furthermore, a delay profile creation section 103, the path detection section 1101, a path limitation section 105 and a demodulation section 106 constitute a demodulation apparatus.

The path detection section 1101 uses a delay profile to which samples are input one by one from the delay profile creation section 103, detects a peak value in the delay profile and selects the detected peak value as a path. Furthermore, when the power values of the respective samples decrease for four samples which corresponds in number to the sampling number 4 consecutively from the immediately preceding sample which is the detected peak value, the path detection section 1101 selects the fourth sample from the immediately preceding sample which is the peak value as a path. Then, the path detection section 1101 outputs the information on the detected path to the path limitation section 105. Details of the path detection section 1101 will be described later.

The path limitation section 105 compares power values between the respective paths based on the information on the selected path input from the path detection section 1101 and selects the same number of paths as fingers sequentially in descending order of power values. Then, the path limitation section 105 outputs the information on the selected path to the demodulation section 106.

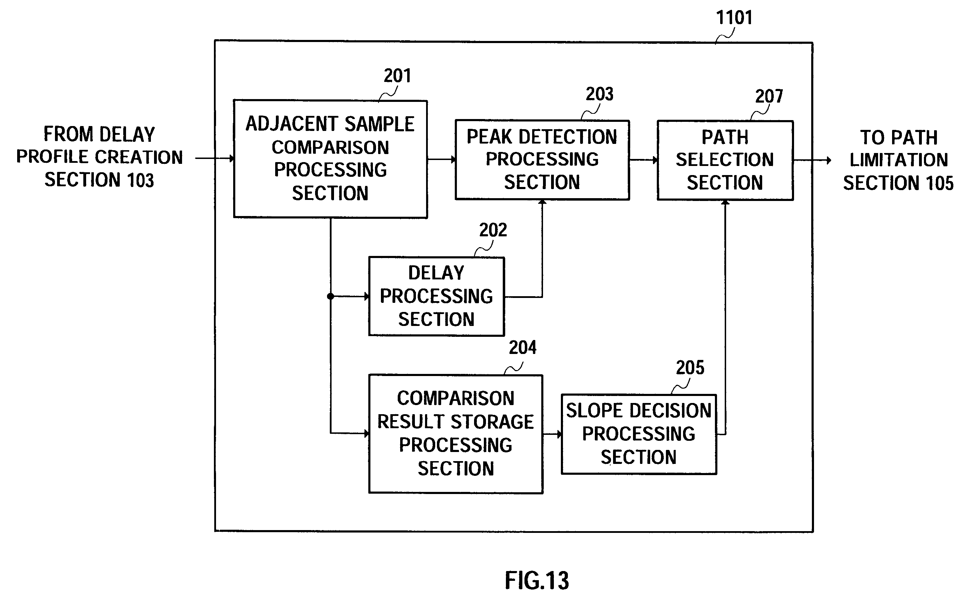

FIG.13 shows the configuration of the path detection section 1101 which is a path detection apparatus according to this Embodiment 3. In FIG.13, the parts having the same configurations as those in FIG.3 are assigned the same reference numerals and explanations thereof will be omitted.

Every time the magnitude comparison result information is input from an adjacent sample comparison processing section 201, a peak detection processing section 203 compares it with the magnitude comparison result information on the immediately preceding sample. That is, when the magnitude comparison result information on the immediately preceding sample is information which indicates "YES" while the magnitude comparison result information on the current sample is information which indicates "NO", the immediately preceding sample is decided to be a peak value. When both the magnitude comparison result information on the immediately preceding sample and the magnitude comparison result information on the current sample are "YES" or "NO", and when the magnitude comparison result of the immediately preceding sample is "NO" and the magnitude comparison result information on the current sample is "YES", the immediately preceding sample is decided not to be a peak value. Then, the peak detection processing section 203 outputs the information on the immediately preceding sample which is the detected peak value to a path selection section 207 and outputs the information on the current sample to the path selection section 207 when the immediately preceding sample is decided not to be a peak value. The operation of the path detection section 1101 is the same as that in FIG.4 except that step ST307 which is a maximum value decision process in FIG.4 and step ST307 which is a maximum value registration process, and therefore explanations thereof will be omitted.

The path selection section 207 selects a predetermined number of path candidates from among the path candidates input from the peak detection processing section 203 in descending order of power values and outputs the path candidates to the path limitation section 105.

Thus, according to this Embodiment 3, when power values of the respective samples decrease from a power value of a sample of a peak value four times consecutively, the path detection section detects the sample whose power value is detected to decrease the fourth time as a path, and can thereby reliably select paths and reduce the error rate of received data. Furthermore, the path detection section selects a path by detecting a peak value and need not scan the delay profile the same number of times as the number of fingers, and can thereby reduce an amount of calculation. Furthermore, even when no path exists, power values of noise components decrease for 4 samples consecutively and the noise components are mistakenly selected as paths, the path limitation section 105 selects the same number of paths as fingers in descending order of power values, which prevents noise having a low power value from being selected as a path and prevents the error rate from increasing.

The path detection apparatus of this Embodiment 3 is applicable to the path detection apparatus of Embodiment 1 and Embodiment 2 above.

Embodiments 1 to 3 above have explained the case where oversampling is performed so that 1 chip has a sampling number of 4, but the present invention is not limited to this and oversampling can be performed so that 1 chip has an arbitrary sampling number. Furthermore, in Embodiment 1 and Embodiment 2 above, a path is selected by scanning the scanning range of the delay profile once, instead of this method, it is also possible to divide the scanning range of the delay profile into two parts and scan each of the divided scanning range in the same direction or mutually opposite directions in parallel to select a path. In this case, it is possible to shorten the processing time to select a path. Furthermore, in Embodiments 1 to 3 above, the magnitude comparison result information is information which indicates "YES" when the power value is decreased from that of the immediately preceding sample and information which indicates "NO" when the power value is not decreased from that of the immediately preceding sample, but instead of such information, the magnitude comparison result information can also be information which indicates "NO" when the power value is decreased from that of the immediately preceding sample and information which indicates "YES" when the power value is not decreased from that of the immediately preceding sample.

As described above, the present invention can reduce an amount of calculation when selecting a path, reliably select a path and reduce the error rate of received data .

This application is based on the Japanese Patent ApplicationNo. 2003-84993 filedonMarch26, 2003, entire content of which is expressly incorporated by reference herein.

### Industrial Applicability

The present invention relates to a path detection apparatus and path detection method and is particularly suitable for use in a path detection apparatus and path detection method for detecting a first arrived wave and delay wave using a delay profile.

## Claims

1. A path detection apparatus comprising:
a peak detection section that detects a peak value of a delay profile created by a received signal sampled with a predetermined sampling number chip by chip;
a comparison section that compares power values between adjacent samples of said delay profile; and
a path selection section that selects, when the power value compared by said comparison section increases or decreases consecutively up to the kth (k is a natural number of 2 or greater) forward or backward from the sample having said peak value, said kth sample as a path.

2. The path detection apparatus according to claim 1, further comprising a path limitation section that selects a path selected by said path selection section whose power value is equal to or greater than a threshold as a path to be used for demodulation.

3. The path detection apparatus according to claim 1, wherein said path selection section selects a sample of the same sampling number as said sample number delayed for a 1-chip time from the sample of said peak value as a path.

4. A reception apparatus provided with a path detection apparatus, said path detection apparatus comprising:
a peak detection section that detects a peak value of a delay profile created by a received signal sampled with a predetermined sampling number chip by chip;
a comparison section that compares power values between adjacent samples of said delay profile; and
a path selection section that selects, when the power value compared by said comparison section increases or decreases consecutively up to the kth (k is a natural number of 2 or greater) forward or backward from the sample having said peak value, said kth sample as a path.

5. A demodulation apparatus provided with a path detection apparatus, said path detection apparatus comprising:
a peak detection section that detects a peak value of a delay profile created by a received signal sampled with a predetermined sampling number chip by chip;
a comparison section that compares power values between adjacent samples of said delay profile; and
a path selection section that selects, when the power value compared by said comparison section increases or decreases consecutively up to the kth (k is a natural number of 2 or greater) sample forward or backward from the sample having said peak value, said kth sample as a path.

6. A path detection method comprising:
a step of detecting a peak value of a delay profile created by a received signal sampled with a predetermined sampling number chip by chip;
a comparison step of comparing power values of adjacent samples of said delay profile; and
a path selection step of selecting, when the compared power value increases or decreases consecutively up to the kth (k is a natural number of 2 or greater) sample forward or backward from the sample having said peak value, said kth sample as a path.
